# EUROPEAN PATENT SPECIFICATION

(11) **EP 3 955 337 B1**
(45) Date of publication and mention of the grant of the patent: **26.11.2025**
(21) Application number: 20788581.5
(22) Date of filing: 05.02.2020
(51) Int. Cl.: H01M 4/131, H01M 4/525, H01M 4/62, C01G 53/00, H01M 10/052, H01M 4/02, C01G 53/04, C01G 53/40, C01G 53/42

(54) **POSITIVE ELECTRODE FOR NONAQUEOUS ELECTROLYTE SECONDARY BATTERY AND NONAQUEOUS ELECTROLYTE SECONDARY BATTERY**
POSITIVELEKTRODE FÜR EINE SEKUNDÄRBATTERIE MIT WASSERFREIEM ELEKTROLYT UND SEKUNDÄRBATTERIE MIT WASSERFREIEM ELEKTROLYT
ÉLECTRODE POSITIVE POUR BATTERIE SECONDAIRE À ÉLECTROLYTE NON AQUEUX, ET BATTERIE SECONDAIRE À ÉLECTROLYTE NON AQUEUX

(30) Priority: 10.04.2019 JP 2019075039
(43) Date of publication of application: 16.02.2022
(73) Proprietor: Panasonic Intellectual Property Management Co., Ltd., Osaka-shi, Osaka 540-6207 (JP)
(72) Inventor: TAKIJIRI, Manabu, Osaka-shi, Osaka 540-6207 (JP); OGASAWARA, Takeshi, Osaka-shi, Osaka 540-6207 (JP); SAITO, Motoharu, Osaka-shi, Osaka 540-6207 (JP); AOKI, Yoshinori, Osaka-shi, Osaka 540-6207 (JP)
(74) Representative: Vigand, Philippe
(86) International application number: PCT/JP2020/004331
(87) International publication number: WO 2020/208918

(56) References cited:
- WO-A1-2012/133436
- CN-A- 108 155 357
- JP-A- 2002 279 985
- JP-A- 2003 151 546
- JP-A- 2019 200 991
- JP-A- H0 922 693

## Description

### TECHNICAL FIELD

The present invention relates to a positive electrode for a non-aqueous electrolyte secondary battery, and a non-aqueous electrolyte secondary battery comprising the same.

### BACKGROUND

In recent years, as a secondary battery having a high power and a high energy density, a non-aqueous electrolyte secondary batteries are widely in use, which comprises a positive electrode, a negative electrode, and a non-aqueous electrolyte, and in which charging and discharging are performed by causing lithium ions to move between the positive electrode and the negative electrode.

As a positive electrode active material used for the positive electrode of the non-aqueous electrolyte secondary battery, for example, the following materials are known.

For example, Patent Literature 1 discloses a positive electrode active material represented by a composition formula of LiₓNi_{1-y}M_{y}O_{2+α} (wherein M is one or more element selected from the group consisting of Sc, Ti, V, Cr, Mn, Fe, Co, Cu, Zn, Ga, Ge, Al, Bi, Sn, Mg, Ca, B, and Zr, 0.9≤x≤1.2, 0<y≤0.7, and α≥0), and wherein an average crystal particle size when a cross section of the particles is observed in an SIM (scanning ion microscope) image is 1.2 µm ~ 5.0 µm.

Further, for example, Patent Literature 2 discloses a positive electrode active material represented by a composition formula of LiₓNi_{1-y}M_{y}O_{2+α} (wherein M is one or more element selected from the group consisting of Sc, Ti, V, Cr, Mn, Fe, Co, Cu, Zn, Ga, Ge, Bi, Sn, Mg, Ca, B, and Zr, 0.9≤x≤1.2, 0<y≤0.7, and α>0.1), wherein an average particle size D50 of primary particles is 1.6 µm ~ 2.3 µm, an amount of alkali on surfaces of particles measured by a two-stage neutralization titration is less than or equal to 1.2 mass%, and, when an amount of lithium hydroxide in the amount of alkali on the particle surfaces is A mass% and an amount of lithium carbonate is B mass%, A/B is less than or equal to 1.
Further, for example, Patent Literature 3 addresses the problem of charge and discharge cycle characteristics and discloses a positive electrode active material for a lithium ion secondary battery, where the positive electrode active material is represented by a general formula LiMO₂ (where M is at least one kind represented by Co, Ni, Fe, Mn, and Cr) and has a hexagonal crystal structure. In particular, the particle shape of the positive electrode active material is hexagonal columnar and 0. 5≦(2c)/(a+b)≦1 (in the formula, a represents the average major axis diameter of the bottom surface, b represents the average minor axis diameter of the bottom surface, and c represents the average particle height).

### CITATION LIST

### PATENT LITERATURE

Patent Literature 1: JP 5876739 B
Patent Literature 2: JP 6030546 B
Patent Literature 3: JP 2003 151546 A

### SUMMARY

When a lithium composite oxide in which a ratio of Ni with respect to a total number of moles of metal elements other than Li is greater than or equal to 80 mol% and less than 100 mol% is used as a positive electrode active material, while an advantage can be achieved in which the capacity of the non-aqueous electrolyte secondary battery is increased, a problem also arises in that a charge/discharge cycle characteristic is reduced.

An advantage of the present invention lies in suppression of reduction of the charge/discharge cycle characteristic of the non-aqueous electrolyte secondary battery when a lithium composite oxide in which a ratio of Ni with respect to a total number of moles of metal elements other than Li is greater than or equal to 80 mol% and less than 100 mol% is used as the positive electrode active material of the non-aqueous electrolyte secondary battery.

According to one aspect of the present invention, there is provided a positive electrode (11) for a non-aqueous electrolyte secondary battery (10), the positive electrode (11) including: a positive electrode active material including lithium composite oxide particles including Ni in an amount of greater than or equal to 80 mol% and less than 100 mol% with respect to a total number of moles of metal elements other than Li; and an electrically conductive material, wherein the lithium composite oxide particles include particles having a step-shape structure in which three or more steps of planes each having a length of an outer edge of greater than or equal to 1 µm are layered, and an average particle size of the electrically conductive material is less than or equal to 30 nm; where the average particle size is determined as indicated in the Description.

According to another aspect of the present invention, there is provided a non-aqueous electrolyte secondary battery (10) comprising a positive electrode (11), a negative electrode (12); and a non-aqueous electrolyte, wherein the positive electrode (11) is the positive electrode (11) for non-aqueous electrolyte secondary battery (10) according to any one of claims 1 to 5. Preferred embodiments of the invention are defined in dependent claims 2 to 5.

According to an aspect of the present invention a lithium composite oxide in which a ratio of Ni with respect to a total number of moles of metal elements other than Li is greater than or equal to 80 mol% and less than 100 mol% is used as a positive electrode active material of a non-aqueous electrolyte secondary battery, and the reduction of the charge/discharge cycle characteristic of the non-aqueous electrolyte secondary battery can be suppressed.

### BRIEF DESCRIPTION OF DRAWINGS

FIG. 1 is a cross-sectional diagram of a non-aqueous electrolyte secondary battery according to an embodiment of the present invention.
FIG. 2 is a schematic diagram showing an example shape of a lithium composite oxide particle.
FIG. 3 is an SEM reflection electron composition image (with a magnification of 3000) of a positive electrode of an Example of the present invention.

### DESCRIPTION OF EMBODIMENTS

The present inventors proposed in a past patent application (Japanese Patent Application No. 2018-071818) that the reduction of the charge/discharge cycle characteristic of the non-aqueous electrolyte secondary battery can be suppressed by employing a step-shape structure, in which three or more steps of planes each having a length of an outer edge of greater than or equal to 1 µm are layered, for lithium composite oxide particles including Ni in an amount of greater than or equal to 80 mol% and less than 100 mol% with respect to a total number of moles of metal elements other than Li.

As a result of a further review, the present inventors found that the reduction of the charge/discharge cycle characteristic of the non-aqueous electrolyte secondary battery can further be suppressed by using a positive electrode having the lithium composite oxide particles having the step-shape structure, and an electrically conductive material having an average particle size of less than or equal to 30 nm. As a factor for achieving the above advantage, the following may be deduced. With the dispersion of the lithium composite oxide particles having the step-shape structure and the electrically conductive materials having the average particle size of less than or equal to 30 nm in a positive electrode active material layer of a positive electrode, a superior electrically conductive network is formed in the positive electrode active material layer. As a result, insertion/detachment reactions of lithium ions in the lithium composite oxide particles having the step-shape structure can be smoothly continued, resulting in suppression of the reduction of the charge/discharge cycle characteristic.

A non-aqueous electrolyte secondary battery according to an embodiment of the present invention will now be described.

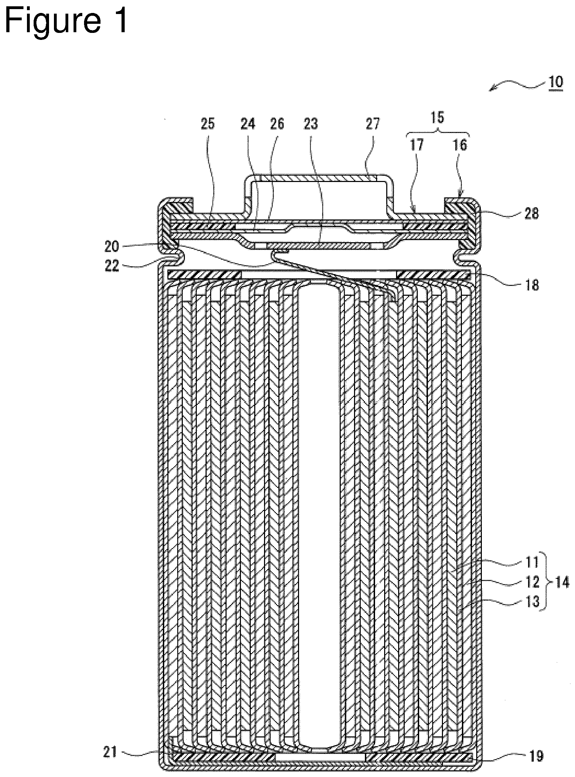

FIG. 1 is a cross-sectional diagram of a non-aqueous electrolyte secondary battery according to an embodiment of the present invention. A non-aqueous electrolyte secondary battery 10 shown in FIG. 1 comprises a rolled-type electrode element 14 in which a positive electrode 11 and a negative electrode 12 are rolled with a separator 13 therebetween, a non-aqueous electrolyte, insulating plates 18 and 19 respectively placed above and below the electrode element 14, and a battery casing 15 which houses the above-described members. The battery casing 15 is formed from a casing body 16 having a circular cylindrical shape with a bottom, and a sealing element 17 which blocks an opening of the casing body 16. Alternatively, in place of the rolled-type electrode element 14, an electrode element of other forms may be employed, such as a layered-type electrode element in which the positive electrode and the negative electrode are alternately layered with the separator therebetween. As the battery casing 15, there may be exemplified a metal casing of a shape such as a cylindrical shape, a polygonal shape, a coin shape, a button shape, or the like, and a resin casing (laminated-type battery) formed by laminating resin sheets.

The casing body 16 is, for example, a metal container having a circular cylindrical shape with a bottom. A gasket 28 is provided between the casing body 16 and the sealing element 17, to secure airtightness in the battery. The casing body 16 has, for example, a protrusion 22 in which a part of a side surface portion protrudes to an inner side and which supports the sealing element 17. The protrusion 22 is desirably formed in an annular shape along a circumferential direction of the casing body 16, and supports the sealing element 17 with an upper surface thereof.

The sealing element 17 has a structure in which a filter 23, a lower valve element 24, an insulating member 25, an upper valve element 26, and a cap 27 are layered in this order from the side of the electrode element 14. The members of the sealing element 17 have, for example, a circular disk shape or a ring shape, and members other than the insulating member 25 are electrically connected to each other. The lower valve element 24 and the upper valve element 26 are connected to each other at central parts thereof, and the insulating member 25 interposes between peripheral parts of the valve elements. When an internal pressure of the non-aqueous electrolyte secondary battery 10 is increased due to heat generation by internal short-circuiting or the like, for example, the lower valve element 24 deforms in such a manner to press the upper valve element 26 toward the side of the cap 27, and ruptures, so that a current path between the lower valve element 24 and the upper valve element 26 is cut off. When the internal pressure further increases, the upper valve element 26 ruptures, and gas is discharged from an opening of the cap 27.

In the non-aqueous electrolyte secondary battery 10 shown in FIG. 1, a positive electrode lead 20 attached to the positive electrode 11 extends through a throughhole of the insulating plate 18 to the side of the sealing element 17, and a negative electrode lead 21 attached to the negative electrode 12 extends through an outer side of the insulating plate 19 to the side of a bottom of the casing body 16. The positive electrode lead 20 is connected by welding or the like to a lower surface of a filter 23 which is a bottom plate of the sealing element 17, and the cap 27 which is a top plate of the sealing element 17 electrically connected to the filter 23 serves as a positive electrode terminal. The negative electrode lead 21 is connected by welding or the like to an inner surface of the bottom of the casing body 16, and the casing body 16 serves as a negative electrode terminal.

The positive electrode 11, the negative electrode 12, the non-aqueous electrolyte, and the separator 13 will now be described in detail.

### <Positive Electrode>

The positive electrode 11 is formed from a positive electrode electricity collector made of, for example, a metal foil or the like, and a positive electrode active material layer formed over the positive electrode electricity collector. For the positive electrode electricity collector, there may be employed a foil of a metal which is stable within a potential range of the positive electrode such as aluminum, a film on a surface layer of which the metal is placed, or the like. The positive electrode active material layer includes a positive electrode active material and an electrically conductive material. From a viewpoint of binding characteristic with the positive electrode electricity collector or the like, desirably, the positive electrode active material layer includes a binder material or the like.

The positive electrode 11 is obtained, for example, by applying and drying a positive electrode mixture slurry including the positive electrode active material, the binder material, the electrically conductive material, or the like over the positive electrode electricity collector, to form the positive electrode active material layer over the positive electrode electricity collector, and rolling the positive electrode active material layer.

The positive electrode active material includes lithium composite oxide particles including Ni in an amount of greater than or equal to 80 mol% and less than 100 mol% with respect to a total number of moles of metal elements other than Li. The lithium composite oxide particles may include elements other than Ni and Li, and may include, for example, at least one element selected from Al, Co, Mn, Ti, Nb, Si, Mo, Zr, V, Fe, Mg, Cr, Cu, Sn, Ta, W, Na, K, Ba, Sr, Bi, Be, Zn, Ca, and B. Of these elements, from a viewpoint of suppression of the reduction of the charge/discharge cycle characteristic or the like, desirably, at least one element chosen from Al, Mn, and Co is employed.

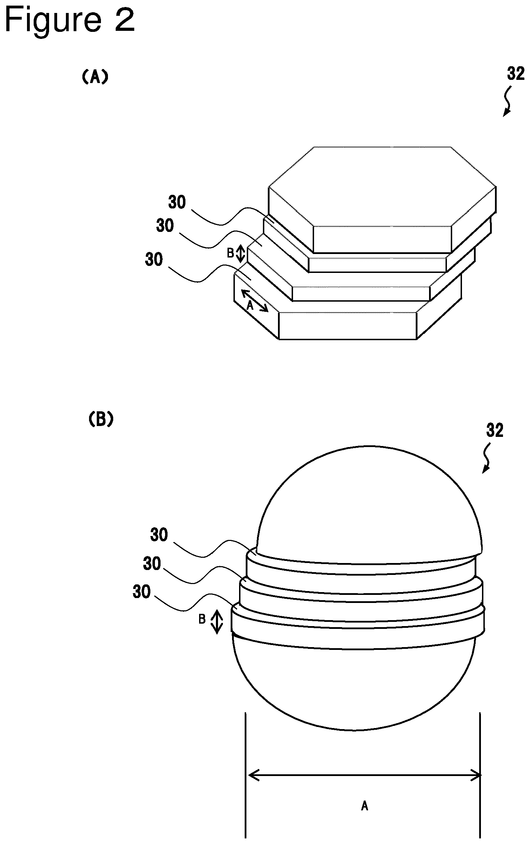

FIGs. 2(A) and 2(B) are schematic diagrams showing an example shape of the lithium composite oxide particle. As shown in FIGs. 2(A) and 2(B), the lithium composite oxide particles including Ni in an amount of greater than or equal to 80 mol% and less than 100 mol% with respect to a total number of moles of metal elements other than Li include particles 32 having a step-shape structure in which three or more steps of planes 30 each having a length of an outer edge (A) of greater than or equal to 1 µm are layered. The lithium composite oxide particles including Ni in an amount of greater than or equal to 80 mol% and less than 100 mol% with respect to a total number of moles of metal elements other than Li may be formed solely from the particles 32, or may further include particles having other known shapes, in addition to the particles 32.

It is sufficient that the length of the outer edge (A) of the plane 30 is greater than or equal to 1 µm, and, for example, the length is desirably greater than or equal to 2 µm. An upper limit of the length of the outer edge (A) depends on a particle size of the particle, and may be, for example, less than or equal to 15 µm. No particular limitation is imposed on a shape of the outer edge of the plane 30, and the shape may be, for example, a polygonal shape, a curved shape, or the like. A number of layers of the planes 30 may be 3 steps or greater, but desirably, from a viewpoint of further suppression of the reduction of the charge/discharge cycle characteristic, the number of steps is 5 steps or greater. An upper limit of the number of layers of the planes 30 depends on the particle size of the particle, and may be, for example, 15 steps or less. A step of the step-shape structure (a height (B) from one plane 30 to a plane 30 immediately thereabove) is desirably in a range of, for example, greater than or equal to 0.01 µm and less than or equal to 1 µm from a viewpoint of further suppression of the reduction of the charge/discharge cycle characteristic, and is more desirably in a range of greater than or equal to 0.03 µm and less than or equal to 0.2 µm.

A ratio of the particles 32 is desirably greater than or equal to 3% with respect to the entirety of the lithium composite oxide particles including Ni in an amount of greater than or equal to 80 mol% and less than or equal to 100 mol% with respect to a total number of moles of metal elements other than Li, and is more desirably greater than or equal to 5%. When the ratio of the particles 32 satisfies the above-described range, the reduction of the charge/discharge cycle characteristic can be further suppressed as compared to the case in which the range is not satisfied.

The ratio of the particles 32 is determined by the following method. Using an electron microscope, 20 fields of view are randomly observed with a magnification to allow sufficient observation of the surfaces of the lithium composite oxide particles. A total number of particles (M) and a number of particles 32 (N) observed in the field of view are measured. The measurement is performed for the 20 fields of view, and a ratio (N/M) of the number of particles 32 (N) with respect to the total number of particles (M) is determined. An average value of these values is taken as the ratio of the particles 32.

A particle size of the particles 32 is desirably, for example, greater than or equal to 1.5 µm from a viewpoint of the charge/discharge cycle characteristic, and is more desirably greater than or equal to 3 µm. An upper limit of the particle size of the particles 32 is desirably, for example, less than or equal to 20 µm, and is more desirably less than or equal to 15 µm. When the particle size of the particles 32 is too large, the battery capacity may be reduced in some cases. The particle size of the particles 32 is determined by randomly specifying 20 particles 32 using an electron microscope, image-analyzing the specified particles 32, determining a longest size of each of the 20 particles 32, and averaging these values.

A particle fracture strength of the particles 32 is desirably, for example, greater than or equal to 230 MPa, and is more desirably greater than or equal to 300 MPa. When the particle fracture strength of the particles 32 satisfies the above-described range, cracking of the particles 32 due to charging and discharging may be suppressed in comparison to the case in which the range is not satisfied, and the reduction of the charge/discharge cycle characteristic may be further suppressed. No particular limitation is imposed on an upper limit value of the particle fracture strength of the particles 32, and the upper limit value is desirably, for example, less than or equal to 1000 MPa. The particle fracture strength is measured by a method defined by JIS-R1639-5. In JIS-R1639-5, a parameter α (a dimensionless number which changes depending on a position in a granule) is 2.48, but in the present disclosure, this parameter is set to 2.8.

A content of the lithium composite oxide particles including Ni in an amount of greater than or equal to 80 mol% and less than 100 mol% with respect to a total number of moles of metal elements other than Li is desirably, for example, greater than or equal to 90 mass% with respect to a total mass of the positive electrode active material from a viewpoint of improvement of the battery capacity, and is more desirably greater than or equal to 99 mass%.

The positive electrode active material may include lithium composite oxide particles other than the lithium composite oxide particles including Ni in an amount of greater than or equal to 80 mol% and less than 100 mol% with respect to a total number moles of metal elements other than Li. As the other lithium composite oxide particles, there may be exemplified lithium composite oxide particles having a ratio of Ni of less than 80 mol%.

The lithium composite oxide particles including Ni in an amount of greater than or equal to 80 ml% and less than 100 mol% with respect to a total number of moles of metal elements other than Li are obtained by mixing a Ni-containing oxide and a Li compound, and baking the mixture. Here, the particles 32 having the step-shape structure in which three or more steps of planes 30 having a length of the outer edge (A) of greater than or equal to 1 µm are layered are obtained by, for example, adding an alkali or an alkaline earth compound having a melting point of less than or equal to 600°C such as potassium hydroxide to the mixture of the Ni-containing oxide and the Li compound, or by two-stage baking the mixture. Conditions of the two-stage baking are suitably set based on a composition of the Ni-containing oxide, a mixture ratio of the Ni-containing oxide and the Li compound, presence or absence of the addition of potassium hydroxide, or the like. For example, a baking temperature of the second stage is desirably lower than a baking temperature of the first stage. The baking temperature of the first stage is, for example, in a range of 700°C ~ 1000°C, and the baking temperature of the second stage is, for example, in a range of 600°C ~ 800°C. Further, each of baking times of the first and second stages is, for example, 1 to 10 hours. In order to particle-grow the positive electrode active material, a particle size of potassium hydroxide to be added is desirably 3 ~ 20 mm. In addition, because potassium hydroxide reacts with carbon dioxide in the atmosphere to form potassium carbonate, potassium hydroxide is desirably added at a timing when the Ni-containing oxide and the Li compound are mixed.

The electrically conductive material included in the positive electrode active material layer is a material having a higher electrical conductivity than the positive electrode active material, and there may be exemplified carbon powder such as carbon black, acetylene black, Ketjen black, and graphite. These materials may be used as a single entity or as a combination of two or more materials.

It is sufficient that an average particle size of the electrically conductive material is less than or equal to 30 nm, and, from a viewpoint of further suppression of the reduction of the charge/discharge cycle characteristic, the average particle size is desirably less than or equal to 25 nm, and is more desirably less than or equal to 23 nm. A lower limit value of the average particle size of the electrically conductive material is desirably, for example, greater than or equal to 1 nm from a viewpoint of handling characteristic or the like, and is more desirably greater than or equal to 5 nm. The average particle size of the electrically conductive material is obtained by randomly specifying 20 electrically conductive materials using an electron microscope, image-analyzing the specified electrically conductive materials, determining a longest size of each of the 20 electrically conductive materials, and averaging these values.

A BET specific surface area of the electrically conductive material is desirably, for example, greater than or equal to 80 m²/g from a viewpoint of further suppression of the reduction of the charge/discharge cycle characteristic, is more desirably greater than or equal to 100 m²/g and less than or equal to 300 m²/g, and is further desirably greater than or equal to 100 m²/g and less than or equal to 250 m²/g. The BET specific surface area is measured according to a BET method (nitrogen adsorption method) described in JIS R1626.

A content of the electrically conductive material is desirably, for example, greater than or equal to 0.1 mass% and less than or equal to 5 mass% with respect to 100 mass parts of the positive electrode active material from a viewpoint of further suppression of the reduction of the charge/discharge cycle characteristic, and is more desirably greater than or equal to 0.2 mass% and less than or equal to 3 mass%.

As the binder material included in the positive electrode active material layer, for example, there may be exemplified a fluorine-based polymer, a rubber-based polymer, PAN, a polyimide-based resin, an acrylic resin, a polyolefin-based resin, or the like. As the fluorine-based polymer, there may be exemplified, for example, polytetrafluoroethylene (PTFE), polyvinylidene fluoride (PVdF), or a modified product of these. As the rubber-based polymer, there may be exemplified, for example, a copolymer of ethylene-propylene-isoprene, and a copolymer of ethylene-propylene-butadiene. These materials may be employed as a single entity, or two or more of these materials may be employed in combination.

### <Negative Electrode>

The negative electrode 12 includes a negative electrode electricity collector such as, for example, a metal foil, and a negative electrode active material layer formed over the negative electrode electricity collector. For the negative electrode electricity collector, there may be employed a foil of a metal which is stable within a potential range of the negative electrode such as copper, a film on a surface layer of which the metal is placed, or the like. The negative electrode active material layer includes, for example, a negative electrode active material, a binder material, a thickening material, or the like.

The negative electrode 12 is obtained, for example, by applying and drying a negative electrode mixture slurry including the negative electrode active material, the binder material, or the like over the negative electrode electricity collector, to form the negative electrode active material layer over the negative electrode electricity collector, and rolling the negative electrode active material layer.

No particular limitation is imposed on the negative electrode active material included in the negative electrode active material layer, so long as the material can occlude and release lithium ions, and, for example, there may be exemplified a carbon material, a metal which can form an alloy with lithium, an alloy compound including the metal, or the like. As the carbon material, there may be employed graphites such as natural graphite, non-graphitizable carbon, artificial graphite, or the like, coke, or the like. As the alloy compound, there may be exemplified a compound which includes at least one metal which can form an alloy with lithium. Silicon and tin are desirably used as the element which can form the alloy with lithium, and, alternatively, compounds formed by these elements being bonded with oxygen; that is, silicon oxide and tin oxide, may be employed. Alternatively, a mixture of the carbon material described above and the compound of silicon or tin may be used. In addition to the above, a material may be used having a higher potential of charging and discharging with respect to metal lithium such as lithium titanate than the carbon material or the like.

As the binder material included in the negative electrode active material layer, there may be employed, similar to the case of the positive electrode, a fluorine-based polymer, a rubber-based polymer, PAN, a polyimide-based resin, an acrylic resin, a polyolefin-based resin, or the like. When the negative electrode mixture slurry is prepared using a water-based solvent, desirably, there is employed styrene-butadiene rubber (SBR), carboxymethyl cellulose (CMC) or a salt thereof, polyacrylic acid (PAA) or a salt thereof (such as PAA-Na, PAA-K, and a partially neutral salt), polyvinyl alcohol (PVA), polyethylene oxide (PEO), or the like.

### <Non-aqueous Electrolyte>

The non-aqueous electrolyte includes a non-aqueous solvent and an electrolyte salt dissolved in the non-aqueous solvent. The non-aqueous electrolyte is not limited to a liquid electrolyte (non-aqueous electrolyte solution), and a solid electrolyte which uses gel-form polymer or the like may alternatively be employed. For the non-aqueous solvent, there may be employed, for example, esters, ethers, nitriles such as acetonitrile, amides such as dimethylformamide, or a mixture solvent of two or more of these solvents. Further, the non-aqueous solvent may contain a halogen substitution product in which at least a part of hydrogen of the solvent is substituted with a halogen atom such as fluorine.

Examples of the esters include cyclic ester carbonates such as ethylene carbonate (EC), propylene carbonate (PC), and butylene carbonate, chain ester carbonates such as dimethyl carbonate (DMC), ethylmethyl carbonate (EMC), diethyl carbonate (DEC), methylpropyl carbonate, ethylpropyl carbonate, and methyl isopropyl carbonate, cyclic ester carboxylates such as γ-butyrolactone (GBL) and γ-valerolactone (GVL), and chain ester carboxylates such as ester carboxylate, methyl acetate, ethyl acetate, propyl acetate, methyl propionate (MP), ethyl propionate, and γ-butyrolactone.

Examples of the ethers include cyclic ethers such as 1,3-dioxolane, 4-methyl-1,3-dioxolane, tetrahydrofuran, 2-methyl tetrahydrofuran, propylene oxide, 1,2-butylene oxide, 1,3-dioxane, 1,4-dioxane, 1,3,5-trioxane, furan, 2-methyl furan, 1,8-cineol, and crown ether, and chain ethers such as 1,2-dimethoxy ethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxy benzene, 1,2-diethoxy ethane, 1,2-dibutoxy ethane, diethylene glycol dimethyl ether, diethylene glycol diethyl ether, diethylene glycol dibutyl ether, 1,1-dimethoxy methane, 1,1-diethoxy ethane, triethylene glycol dimethyl ether, and tetraethylene glycol dimethyl ether.

As the halogen substitution product, desirably, fluorinated cyclic ester carbonates such as fluoroethylene carbonate (FEC), fluorinated chain ester carbonates, or fluorinated chain ester carboxylates such as fluoromethyl propionate (FMP) is employed.

The electrolyte salt is desirably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (wherein 1<x<6, n is 1 or 2), LiB₁₀Cl₁₀, LiCl, LiBr, LiI, lithium chloroborane, lithium lower aliphatic carboxylate, borate salts such as Li₂B₄O₇ and Li(B(C₂O₄)F₂), and imide salts such as LiN(SO₂CF₃)₂, and LiN(C₁F₂ₗ₊₁SO₂)(CₘF₂ₘ₊₁SO₂) (wherein each of l and m is an integer greater than or equal to 0). As the lithium salt, these materials may be used as a single material or a mixture of a plurality of these materials may be used. Of these, LiPF₆ is desirably used, from the viewpoints of ion conductivity, electrochemical stability, or the like. A concentration of the lithium salt is desirably set to 0.8 ~ 1.8 mol per 1 L of the non-aqueous solvent.

### <Separator>

For the separator 13, for example, a porous sheet having an ion permeability and an insulating property is used. Examples of the porous sheet include a microporous thin film, a woven fabric, a non-woven fabric, or the like. As the material of the separator, desirably, an olefin-based resin such as polyethylene and polypropylene, cellulose, or the like is used.

### EXAMPLES

The present invention will now be described in further detail with reference to Examples. The present invention, however, is not limited to these Examples.

### <Example 1>

### [Production of Ni-containing Lithium Composite Oxide Particles]

A composite hydroxide obtained by coprecipitation and represented by [Ni_{0.88}Co_{0.09}Al_{0.03}](OH)₂ was baked at 500°C for 10 hours, to obtain a composite oxide containing Ni, Co, and Al. An average particle size (D50) of this composite oxide was 12 µm. Then, LiOH and the composite oxide containing Ni, Co, and Al were mixed in such a manner that a molar ratio between Li and a total amount of Ni, Co, and Al was 1.03:1, and then, KOH was added in an amount of 10 mass% with respect to the mixture. The resulting mixture was baked in an oxygen gas stream under 750°C for 40 hours. Then, impurities were removed by water washing, and Ni-containing lithium composite oxide particles were obtained.

### [Production of Positive Electrode]

100 mass% of the Ni-containing lithium composite oxide particles described above and serving as the positive electrode active material, 1 mass% of acetylene black (having an average particle size of 23 nm) serving as the electrically conductive material, and 0.9 mass% of polyvinylidene fluoride serving as the binder material were mixed, and N-methyl-2-pyrrolidone was added in a suitable amount, to prepare a positive electrode mixture slurry. Then, the positive electrode mixture slurry was applied over both surfaces of a positive electrode electricity collector made of aluminum and having a thickness of 15 µm, and the applied film was rolled, to form positive electrode active material layers having a thickness of 70 µm over both surfaces of the positive electrode electricity collector. The resulting structure was taken as a positive electrode of Example 1.

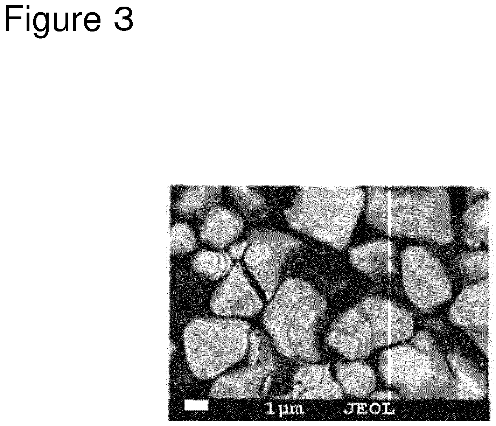

FIG. 3 is an SEM reflection electron composition image (with a magnification of 3000) of the positive electrode obtained in Example 1. As shown in FIG. 3, the Ni-containing lithium composite oxide particles obtained in Example 1 included particles having a step-shape structure in which three or more steps of planes each having a length of an outer periphery of greater than or equal to 1 µm are layered. In addition, a ratio of the particles having the step-shape structure was 90% with respect to the entirety of the Ni-containing lithium composite oxide particles obtained in Example 1. The measurement method is already described above.

### [Production of Negative Electrode]

100 mass% of graphite serving as a negative electrode active material, and 1 mass% of a copolymer of styrene-butadiene (SBR) serving as a binder material were mixed, and water was added in a suitable amount, to prepare a negative electrode mixture slurry. Then, the negative electrode mixture slurry was applied over both surfaces of a negative electrode electricity collector made of copper and having a thickness of 10 µm, and the applied film was rolled, to form negative electrode active material layers having a thickness of 100 µm over both surfaces of the negative electrode electricity collector. The resulting structure was taken as a negative electrode.

### [Preparation of Electrolyte Solution]

To a mixture solvent obtained by mixing fluorinated ethylene carbonate (FEC), ethylmethyl carbonate (EMC), and dimethyl carbonate (DMC) with a volume ratio of 15:45:40, lithium hexafluorophosphate (LiPF₆) was dissolved in a concentration of 1.3 mol/liter, to prepare an electrolyte solution.

### [Production of Non-aqueous Electrolyte Secondary Battery]

The positive electrode described above and the negative electrode described above were respectively cut in a predetermined size, an electrode tab was attached, and the electrodes were rolled with the separator interposed therebetween, to produce a rolled type electrode element. In a state in which insulating plates were placed above and below the electrode element, the structure was housed in a casing body (having a diameter of 18 mm and a height of 65 mm) made of steel and plated with Ni, the negative electrode tab was welded to the bottom of the casing body, and the positive electrode tab was welded to the sealing element. After the electrolyte solution described above was injected into the casing body, the casing body was airtightly sealed with the sealing element, to produce a non-aqueous electrolyte secondary battery.

### <Example 2>

A non-aqueous electrolyte secondary battery was produced in a manner similar to Example 1 except that a composite hydroxide was used which was obtained by coprecipitation and represented by [Ni_{0.91}Co_{0.045}Al_{0.045}](OH)₂.

### <Comparative Example 1>

A non-aqueous electrolyte secondary battery was produced in a manner similar to Example 1 except that acetylene black having an average particle size of 35 nm was used as the electrically conductive material.

### <Comparative Example 2>

A non-aqueous electrolyte secondary battery was produced in a manner similar to Example 1, except that KOH was not added in the production of the Ni-containing lithium composite oxide particles. As a result of an observation with an electron microscope of the Ni-containing lithium composite oxide particles obtained in Comparative Example 2, no particle was found having the step-shape structure as in Example 1.

### <Comparative Example 3>

A non-aqueous electrolyte secondary battery was produced in a manner similar to Example 1, except that KOH was not added in the production of the Ni-containing lithium composite oxide particles, and that acetylene black having an average particle size of 35 nm was used as the electrically conductive material in the production of the positive electrode. As a result of an observation with an electron microscope of the Ni-containing lithium composite oxide particles obtained in Comparative Example 3, no particle was found having the step-shape structure as in Example 1.

### [Measurement of Capacity Maintaining Rate in Charge/Discharge Cycle Characteristic]

Under a surrounding temperature of 45°C, the non-aqueous electrolyte secondary batteries of Examples and Comparative Examples were charged with a constant current of 0.5 C until the battery voltage reached 4.15 V, and then were discharged with a constant current of 0.5 C until the battery voltage became 3.0 V. The charge/discharge cycle were repeated for 100 cycles, and a capacity maintaining rate in the charge/discharge cycle was determined by the following formula for the non-aqueous electrolyte secondary batteries of Examples and Comparative Examples. A higher capacity maintaining rate shows further suppression of the reduction of the charge/discharge cycle characteristic. Capacity Maintaining Rate = (discharge capacity at 100th cycle/discharge capacity at 1st cycle) x 100

**[TABLE 1]**

| | Ni RATIO | PRESENCE/ABSENCE OF STEP-SHAPE STRUCTURE | AVERAGE PARTICLE SIZE OF ELECTRICALLY CONDUCTIVE MATERIAL | CAPACITY MAINTAINING RATE 45°C 2H cycle @100cyc |
|---|---|---|---|---|
| EXAMPLE 1 | 88 | PRESENT | 23nm | 98.8 |
| EXAMPLE 2 | 91 | PRESENT | 23nm | 98.2 |
| COMPARATIVE EXAMPLE 1 | 88 | PRESENT | 35nm | 95.7 |
| COMPARATIVE EXAMPLE 2 | 88 | ABSENT (AGGREGATED PARTICLE) | 23nm | 95.3 |
| COMPARATIVE EXAMPLE 3 | 88 | ABSENT (AGGREGATED PARTICLE) | 35nm | 95.4 |

As shown in TABLE 1, the capacity maintaining rate of the non-aqueous electrolyte secondary battery of Example 1 was 98.8% and the capacity maintaining rate of the non-aqueous electrolyte secondary battery of Example 2 was 98.2%. The capacity maintaining rate of the non-aqueous electrolyte secondary battery of Comparative Example 1 was 95.7%, the capacity maintaining rate of the non-aqueous electrolyte secondary battery of Comparative Example 2 was 95.3%, and the capacity maintaining rate of the non-aqueous electrolyte secondary battery of Comparative Example 3 was 95.4%. Thus, it can be said that the reduction of the charge/discharge cycle characteristic of the non-aqueous electrolyte secondary battery can be suppressed by using a positive electrode having Ni-containing lithium composite oxide particles including particles having a step-shape structure in which three or more steps of planes each having a length of an outer edge of greater than or equal to 1 µm are layered, and an electrically conductive material having an average particle size of less than or equal to 30 nm.

### REFERENCE SIGNS LIST

10 NON-AQUEOUS ELECTROLYTE SECONDARY BATTERY; 11 POSITIVE ELECTRODE; 12 NEGATIVE ELECTRODE; 13 SEPARATOR; 14 ELECTRODE ELEMENT; 15 BATTERY CASING; 16 CASING BODY; 17 SEALING ELEMENT; 18, 19 INSULATING PLATE; 20 POSITIVE ELECTRODE LEAD; 21 NEGATIVE ELECTRODE LEAD; 22 PROTRUSION: 23 FILTER; 24 LOWER VALVE ELEMENT; 25 INSULATING MEMBER; 26 UPPER VALVE ELEMENT; 27 CAP; 28 GASKET.

## Claims

1. A positive electrode (11) for a non-aqueous electrolyte secondary battery (10), the positive electrode (11) comprising:
a positive electrode active material including lithium-containing composite oxide particles including Ni in an amount of greater than or equal to 80 mol% and less than 100 mol% with respect to a total number of moles of metal elements other than Li; and
an electrically conductive material, wherein
the lithium-containing composite oxide particles include particles having a step-shape structure in which three or more steps of planes each having a length of an outer edge of greater than or equal to 1 µm in an SEM refection electron composition image with with a magnification of 3000 are layered, and
an average particle size of the electrically conductive material is less than or equal to 30 nm; where the average particle size is determined as indicated in the Description.

2. The positive electrode (11) for non-aqueous electrolyte secondary battery (10) according to claim 1, wherein
a step of the step-shape structure is greater than or equal to 0.01 µm and less than or equal to 1 µm.

3. The positive electrode (11) for non-aqueous electrolyte secondary battery (10) according to claim 1 or 2, wherein
a particle fracture strength of the particles having the step-shape structure is greater than or equal to 230 MPa; where the particle fracture strength is measured by a method defined by JIS-R1639-5, as indicated in the Description.

4. The positive electrode (11) for non-aqueous electrolyte secondary battery (10) according to any one of claims 1 to 3, wherein
the average particle size of the electrically conductive material is greater than or equal to 1 nm and less than or equal to 25 nm; where the average particle size is determined as indicated in the Description.

5. The positive electrode (11) for non-aqueous electrolyte secondary battery (10) according to any one of claims 1 to 4, wherein
a BET specific surface area of the electrically conductive material is greater than or equal to 80 m²/g; where the BET specific surface area is measured according to a nitrogen adsorption method described in JIS-R1626, as indicated in the Description.

6. A non-aqueous electrolyte secondary battery (10) comprising:
a positive electrode (11);
a negative electrode (12); and
a non-aqueous electrolyte, wherein
the positive electrode (11) is the positive electrode (11) for non-aqueous electrolyte secondary battery (10) according to any one of claims 1 to 5.

## Patentansprüche

1. Positivelektrode (11) für Sekundärbatterie (10) mit wasserfreiem Elektrolyt, wobei die Positivelektrode (11) umfasst:
ein Positivelektroden-Aktivmaterial, das lithiumhaltige Verbundoxidpartikel umfasst, die, bezogen auf eine Gesamtanzahl von Molen von Metallelementen außer Li, Ni in einer Menge von größer oder gleich 80 Mol% und weniger als 100 Mol% umfassen; und
ein elektrisch leitfähiges Material, wobei
die lithiumhaltigen Verbundoxidpartikel Partikel umfassen, die eine stufenförmige Struktur aufweisen, in der drei oder mehr Stufen von Ebenen geschichtet sind, die in einem REM-Rückstreuelektronen-Zusammensetzungsbild mit einer Vergrößerung von 3000 jeweils eine Länge einer Außenkante von größer oder gleich 1 µm aufweisen, und
eine durchschnittliche Partikelgröße des elektrisch leitfähigen Materials kleiner oder gleich 30 nm ist; wobei die durchschnittliche Partikelgröße bestimmt wird, wie in der Beschreibung angegeben.

2. Positivelektrode (11) für Sekundärbatterie (10) mit wasserfreiem Elektrolyt nach Anspruch 1, wobei
eine Stufe der stufenförmigen Struktur größer oder gleich 0,01 µm und kleiner oder gleich 1 µm ist.

3. Positivelektrode (11) für Sekundärbatterie (10) mit wasserfreiem Elektrolyt nach Anspruch 1 oder 2, wobei
eine Partikelbruchfestigkeit der Partikel, welche die stufenförmige Struktur aufweisen, größer oder gleich 230 MPa ist; wobei die Partikelbruchfestigkeit durch ein Verfahren gemessen wird, das durch JIS-R1639-5 definiert ist, wie in der Beschreibung angegeben.

4. Positivelektrode (11) für Sekundärbatterie (10) mit wasserfreiem Elektrolyt nach einem der Ansprüche 1 bis 3, wobei
die durchschnittliche Partikelgröße des elektrisch leitfähigen Materials größer oder gleich 1 nm und kleiner oder gleich 25 nm ist; wobei die durchschnittliche Partikelgröße bestimmt wird, wie in der Beschreibung angegeben.

5. Positivelektrode (11) für Sekundärbatterie (10) mit wasserfreiem Elektrolyt nach einem der Ansprüche 1 bis 4, wobei
eine BET-spezifische Oberfläche des elektrisch leitfähigen Materials größer oder gleich 80 m²/g ist; wobei die BET-spezifische Oberfläche gemäß einem Stickstoffadsorptionsverfahren gemessen wird, das in JIS-R1626 beschrieben ist, wie in der Beschreibung angegeben.

6. Sekundärbatterie (10) mit wasserfreiem Elektrolyt, umfassend:
eine Positivelektrode (11);
eine Negativelektrode (12); und
einen wasserfreien Elektrolyten, wobei
die Positivelektrode (11) die Positivelektrode (11) für die Sekundärbatterie (10) mit wasserfreiem Elektrolyten nach einem der Ansprüche 1 bis 5 ist.

## Revendications

1. Électrode positive (11) pour une batterie rechargeable à électrolyte non aqueux (10), l'électrode positive (11) comprenant :
un matériau actif d'électrode positive incluant des particules d'oxyde composite contenant du lithium incluant du Ni en une quantité supérieure ou égale à 80 % en moles et inférieure à 100 % en moles par rapport au nombre total de moles d'éléments métalliques autres que Li ; et
un matériau électriquement conducteur, dans laquelle
les particules d'oxyde composite contenant du lithium incluent des particules ayant une structure de forme étagée dans laquelle trois étages ou plus de plans ayant chacun une longueur d'un bord extérieur supérieure ou égale à 1 µm dans une image de composition en électrons rétrodiffusés au MEB avec un grossissement de 3 000 sont stratifiés, et
la granulométrie moyenne du matériau électriquement conducteur est inférieure ou égale à 30 nm ; où la granulométrie moyenne est déterminée comme indiqué dans la description.

2. Électrode positive (11) pour une batterie rechargeable à électrolyte non aqueux (10) selon la revendication 1, dans laquelle
un étage de la structure de forme étagée est supérieur ou égal à 0,01 µm et inférieur ou égal à 1 µm.

3. Électrode positive (11) pour une batterie rechargeable à électrolyte non aqueux (10) selon la revendication 1 ou 2, dans laquelle
la résistance à la rupture de particule des particules ayant la structure de forme étagée est supérieure ou égale à 230 MPa ; où la résistance à la rupture de particule est mesurée par une méthode définie par la norme JIS-R1639-5, comme indiqué dans la description.

4. Électrode positive (11) pour une batterie rechargeable à électrolyte non aqueux (10) selon l'une quelconque des revendications 1 à 3, dans laquelle
la granulométrie moyenne du matériau électriquement conducteur est supérieure ou égale à 1 nm et inférieure ou égale à 25 nm ; où la granulométrie moyenne est déterminée comme indiqué dans la description.

5. Électrode positive (11) pour une batterie rechargeable à électrolyte non aqueux (10) selon l'une quelconque des revendications 1 à 4, dans laquelle
la surface spécifique BET du matériau électriquement conducteur est supérieure ou égale à 80 m²/g ; où la surface spécifique BET est mesurée conformément à une méthode d'adsorption d'azote décrite dans la norme JIS-R1626, comme indiqué dans la description.

6. Batterie rechargeable à électrolyte non aqueux (10) comprenant :
une électrode positive (11) ;
une électrode négative (12) ; et
un électrolyte non aqueux, dans laquelle
l'électrode positive (11) est l'électrode positive (11) pour une batterie rechargeable à électrolyte non aqueux (10) selon l'une quelconque des revendications 1 à 5.
